# EUROPEAN PATENT APPLICATION

(11) **EP 3 789 946 A1**
(43) Date of publication of application: **10.03.2021**
(21) Application number: 19195187.0
(22) Date of filing: 03.09.2019
(51) Int. Cl.: G06Q 10/10

(54) **A METHOD AND SYSTEM FOR COLLECTING WORK ENVIRONMENT SAFETY DATA**

(71) Applicant: Scoutbase ApS, 5700 Svendborg (DK)
(72) Inventor: Nielsen, Mads Ragnvald, 5700 Svendborg (DK); Nause-Blüml, Sebastian, 2400 Copenhagen NV (DK); Askar, Yassin Abdulrahman Deria, 2200 Copenhagen N (DK)
(74) Representative: AWA Denmark A/S

(57) **Abstract**

Disclosed is a method for collecting work environment safety data in a local network comprising an access point. The method comprises the steps of: receiving, at the access point, an association request from a user device which connects to the local network, transmitting, via the access point, an association response to the user device, requesting one or more identifiers of the user device, determining whether the user device has answered a previous question, subsequent to the step of determining, transmitting one or more questions relating to work environment safety to the user device, wherein, where it is determined that the user device has answered a previous question, the one or more questions are based on the previous question and/or a previous answer of the user device, obtaining an answer to the one or more questions from the user device, providing the user device with internet access, and transmitting the answer of the user device to another device. A user device, a network device, a system, and a method for collecting work environment safety data at offshore locations without cellular coverage are further disclosed.

## Description

### Field

The present invention relates to a method for collecting work environment safety data in a local network comprising an access point. The present invention further relates to a network device, to a user device, and to a system comprising a network device, a user device, an access point and another device.

### Background

Work environment safety for employees is a common concern for employers who in general wish to provide a work environment where physical or psychological injuries and/or illness to employees are avoided. Notably offshore, such as on ships, container vessels, or drilling platforms, where the employees are staying and where dependency on the individual employee is high, a highly safe environment is often desired. For the same reasons, a safe work environment is typically desired in other remote workplaces, such as mines, remote construction sites, or the like.

In order to provide a safe work environment, it is generally preferred to monitor the work environment and the well-being of the employees to prevent injuries, sickness, or leave of the employees. Thus, information and data regarding the employees and the work environment are generally sought so as to know if and where improvements and/or measures need to be made/taken. The information and data may, for instance, be used to map whether employees feel stressed and/or have experienced potentially dangerous situations.

Such information is typically based on input from the employees. A way of requesting such input is to send questions or questionnaires to employees via e-mail and asking them to reply or with a link to a website, on which they can answer the questions/questionnaire. The e-mails may be sent out with regular intervals to obtain continuous input from the employees.

The information and data may, nonetheless, be difficult to obtain as employees may consider such e-mails being less important than other incoming e-mail, the e-mails may erroneously be filtered out by a spam filter, and/or employees may change e-mail addresses or simply not check their e-mail frequently. Moreover, the employer may need to securely store and maintain a database containing the e-mail address of each of the employees, which may lead to a time-consuming the complex system for the employer. This may, notably, be an issue at offshore or remote workplaces using employees who are employed periodically or for a shorter period of time. Furthermore, employees may fear that they and their answers can be identified via their e-mail address and may be reluctant to complain or answer untruthfully as they may fear that the employer might use their answers against them.

It therefore remains a problem to obtain work environment safety data, which allow a continuous monitoring of the work environment safety, whilst minimising the necessary time and complexity and/or maintenance of a system for obtaining such data. Obtaining such data should furthermore preferably be performed in a secure way to the employees.

### Summary

According to a first aspect, the invention relates to a method for collecting work environment safety data in a local network comprising an access point, the method comprising the steps of:
a) receiving, at the access point, an association request from a user device which connects to the local network,
b) transmitting, via the access point, an association response to the user device,
c) requesting one or more identifiers of the user device,
d) determining whether the user device has answered a previous question,
e) subsequent to step d), transmitting one or more questions relating to work environment safety to the user device, wherein, where it is determined that the user device has answered a previous question, the one or more questions are based on the previous question and/or a previous answer of the user device,
f) obtaining an answer to the one or more questions from the user device,
g) providing the user device with internet access, and
h) transmitting the answer of the user device to another device.

It has been realised that by transmitting one or more questions relating to work environment safety to the user device, such as a smartphone, a tablet, a personal computer, or the like, to be answered by the user, such as an employee, and obtaining an answer thereto, data relating to work environment safety may be obtained in an easy manner and minimising the necessary time and effort for the employee to provide their input. Since user devices are a commodity for employees in most workplaces and internet access is required for many daily social and recreational tasks, it has been found that employees will generally be prepared to answer one or more questions relating to work environment safety in order to gain internet access. Moreover, due to the general desire to gain internet access, representative work environment safety data may be achieved as the present method may lead to responses from most or all employees in a given work environment.

By transmitting question(s) based on a previous question and/or a previous answer of the user device, the question(s) and the answer thereto may be directed at various aspects of work environment so as to gain a full view of the work environment safety, and/or they may be directed at a specific point, e.g. a point wherein data has shown that a potential issue may lie or arise. Moreover, it may be prevented that the same employee will need to answer the same questions over and over, in turn making it tedious for the employee who might then answer in an unfocused or unserious manner. Thereby, the present method, in turn, allows for a continuous data collection of work environment data.

The step of determining whether the user device has answered a previous question may be performed based on the one or more identifiers of the user device. In some embodiments, this step is based on a comparison between the one or more identifiers of the user device and a stored identifier, such as an identifier stored in a database of identifiers. Alternatively or additionally the step is based on a comparison between the one or more identifiers and a stored identifier and, where these correspond, such as are identical, to each other, reading a stored value corresponding to the stored identifier. The stored value may be an indication that the user has responded to a previous question, an indication of the previous question, an indication of the one or more questions to be transmitted to the device, and/or may be the previous question.

Where it is determined that the user device has not answered a previous question, one or more questions may be selected randomly and transmitted to the user device. The questions may be selected from a register, a database, or a bank of predetermined questions.

By transmitting the answer to another device, the answer of multiple user devices may be gathered at a single location to generate empirical data relating to the work environment. Thus, a larger empirical basis may be provided to, in turn, allow for a higher statistical accuracy of the data, e.g. where multiple local networks and/or multiple access points are provided within a work environment.

The present method may be used and/or may be for use in work environments of remote workplaces where there is little or no cellular data coverage, such as at offshore workplaces, in mines, or the like. Thereby, any employee who wishes to gain internet access may have to provide an answer to the one or more questions in order to gain internet access.

Throughout this specification, "Work environment safety" may comprise and/or relate to a psychological work environment, such as a stress level, sleep, and/or fatigue, and/or comprise or relate to physical safety, such as (potential or potentially) dangerous situations, injuries, and/or lack of safety equipment. Work environment safety may therefore alternatively or additionally relate to the well-being, physiological and/or psychological, of people.

The one or more questions may be provided as questionnaire. The questions may be user questions, such as questions to be answered by a user of the user device. Throughout the specification, a user of the user device is considered an employee and the terms may, thus, be used interchangeably. In some embodiments, the one or more questions are selected in a separate step and/or may be selected based on the previous question, where it is determined that the user device has answered a previous question, and subsequently transmitted to the user device.

The local network may, throughout this specification be a local area network (LAN) or a wireless LAN (WLAN), such as a Wi-Fi network. The local network may further comprise one or more of the following components: a gateway, a router, a network controller, a network device for requesting and/or storing the identifier, providing the questions and/or for obtaining the answers, and/or a modem, such as a satellite modem, for providing internet connectivity. The network controller may redirect outgoing traffic to the network device, at least until step g) is performed. The various components may be provided as separate units, which may be communicatively connected to each other, and/or the functionality of two or more of the components may be integrated in one or more units.

The connection between the access point and the user device may be a wireless connection. In other words, the association request and association response may be received and/or transmitted, respectively, wirelessly. In some embodiments, the connection between the access point and the user device is a Wi-Fi connection according to the IEEE 802.11 standard. The connection may, for instance be provided at a transmit- and receive frequency of approximately 2.4 GHz and/or 5 GHz. A such wireless connection between the access point and the user device may be implemented according to any standard or known method and will therefore not be described in further detail throughout this specification.

The steps of the present method may, except where specifically stated otherwise, be performed in any order, such as a), b), c), d), e), f), g), h), or a), b), c), d), e), f), h), g). In some embodiments, step b) is performed subsequent to step a). Step c) may be performed subsequent to step b), and additionally or alternatively, step d) may be performed subsequent to step c). Step f) may, moreover, be performed subsequent to step e).

In some embodiments, step g) is performed subsequent to step f), such that internet access is provided to the user device when the answer to the one or more questions have been obtained. Alternatively or additionally, a limited internet access, such as access to some internet pages, and/or a limited bandwidth or data transfer rate, may be provided to the user device prior to step f). Internet access with higher bandwidth and/or with fewer or no restrictions may be provided at step g). Step g) may alternatively be denoted as "granting internet access to the user device". Internet access may in some embodiments be or comprise access to an internal network, be provided via a VPN-connection, and/or may be limited in other ways. In some embodiments, the user is able to skip answering a question of the one or more questions and may, instead, be presented with another question to answer. Alternatively or additionally, the user may be able to skip answering the one or more questions, i.e. not answer any question.

The identifier of the user device may be and/or may comprise a hardware identifier of the user device. The hardware identifier may be a media access control (MAC) address, an International Mobile Equipment Identity (IMEI) number, and/or a serial number, of the user device and/or of components of the user device. The identifier is, in some embodiments, a unique and static identifier, i.e. an identifier which is unique to the particular user device and which remains identical upon a later connection request of the same user device. Thereby, the user device will be easily identifiable so that it can easily be determined, whether the user device has answered a previous question.

Step c) may alternatively or additionally be based on the MAC-address of the user device, such comprise the MAC-address, parts of the MAC address, and/or comprise a cross-sum of at least part of the MAC-address.

The previous question may be answered by the user device in a previous network session. A network session may here be defined as a time frame from a network connection of the user device is established to the local network, until the network connection is terminated, e.g. due caused by manual or automatic switch-off or standby of a network module of the user device or by timeout of a dynamic host configuration protocol (DHCP) lease, where DHCP is used in the local network.

In some embodiments, step e) further comprises transmitting to the user device a plurality of predetermined possible answers, of which one or more is/are to be selected as the answer of the user device to the one or more questions.

Thereby, quantitative data may be obtained, in turn allowing for an easy overview of the answers and thus an easily obtainable overview of a work environment safety status.

Alternatively or additionally, the method further comprises the step of verifying that the answer substantially fulfils one or more predetermined criteria.

The predetermined criteria may be chosen so as to check whether the question(s) have been answered properly, i.e. whether a meaningful response has been provided by the user. The criteria may furthermore be a predetermined number of questions, which the user device should answer. The step of verifying the answer may be performed prior to step g) and subsequent to step f).

The method according may further comprise the step of:
i) storing the one or more identifiers of the user device and the answer of the user device in a local database.

Step h)0 may comprise transmitting the stored answer from the local database to the other device.

The local database may be a database arranged in the local network. Thereby the transmission of the stored answer may be performed at a desired point in time, thus allowing for a more flexible use of the network connection. For instance, the stored answer may be transmitted when few or no user devices are connected to the internet, to provide a larger bandwidth to the user devices, when these are connected.

Furthermore, by storing the one or more identifiers of the user device in the local database, a reduced latency may be achieved when providing the questions may be provided, as the one or more identifiers need not be transmitted over the internet, when these are used to determine whether the user device has answered a previous question. Moreover, a higher security may be provided as the one or more identifiers need not be transmitted over the internet where they may be intercepted and/or read by unauthorised persons.

The local database may be arranged in a network device. The transmission of the stored answer may further be performed via the network device. Steps c), d), e), f) and g) may alternatively or additionally be performed by or via the network device.

In some embodiments, step h) comprises transmitting the answer of the user device to the other device without transmitting the one or more identifiers of the user device.

Step g) may comprise providing internet access to the user device for a predetermined internet session time.

Thereby, upon expiry of the predetermined internet session time, the steps of the process may be performed upon an internet connection attempt from the user device. Thus one or more questions may, again, need to be answered by the user device, in turn providing continuous work environment safety data.

The predetermined internet session time may be in the range from one minute to one month, such as from half an hour to two weeks, such as from one hour to one week, such as from 6 hours to 48 hours, such as 24 hours. Alternatively or additionally, the predetermined internet session time may depend on the answer of the user, the one or more questions, and/or the number of questions.

Step d) may comprise determining whether the user device has answered the previous question based on the identifier of the user device, a stored identifier of the user device, and one or more of: a stored answer to the previous question, an indication that the previous question has been answered, an indication of the next question to be answered by the user device.

Consequently, the one or more questions may be customised to the user device so as to gain data relating to a particular aspect of the work environment safety. The previous question, an indication that the previous question has been answered, an indication of the next question to be answered by the user device may be stored in a local database, where this is provided.

The one or more questions may be selected from a plurality of questions, said plurality of predetermined questions comprising the previous question.

Thereby the same questions may be provided to various user devices connecting to the local network. Moreover, the question(s) may be provided in a computationally easy manner, as these need not be generated upon the request but may be selected from the predetermined questions.

The predetermined questions may be stored in a local database where this is provided and/or may be stored in another database in the local network. Alternatively or additionally the predetermined questions may be stored and/or provided externally, i.e. from outside the local network.

The other device is a remote device, such as a server, arranged externally of the local network.

Thereby, the answer may be accessed and/or data processed to provide a statistical data set externally of the local network, allowing for reduced computational effort within the local network as well as reducing the need for storage in the local network, thus allowing for a simpler network structure.

The internet connectivity for the internet access may be provided via a satellite connection.

Step h) may comprise receiving an answer transmit request from the other device and in response hereto transmit the answer of the user device to the other device.

Thus, the answer may be received at the other device when needed at this point, in turn allowing for a more flexible work environment safety data collection.

According to a second aspect, the invention relates to a network device for collecting work environment safety data in a local network, the local network comprising an access point configured to receive an association request from a user device which connects to the local network and transmit an association response to the user device, the network device comprising a processor configured to perform the steps of:
a) requesting one or more identifiers of the user device,
b) determining whether the user device has answered a previous question,
c) subsequent to step b), transmitting one or more questions relating to work environment safety to the user device, wherein, where it is determined that the user device has answered a previous question, the one or more questions are based on the previous question and/or a previous answer of the user device,
d) obtaining an answer to the one or more questions from the user device,
e) providing the user device with internet access, and
f) transmitting the answer of the user device to another device.

The network device may provide identical or similar advantages to the method according to the first aspect of the invention. Embodiments of the network device and/or the steps, which the processor of the network device is configured to perform, may be the same as described with respect to the method according to the first aspect of the invention.

The network device may be communicatively connected to the access point. By having the network device in the local network, a higher degree of anonymity of the employees may further be provided, as the identifier(s) of the user device may remain within the local network and, thus, not be transmitted to an external device.

In some embodiments, the network device is connected to a switch, a gateway, and/or a router via a cable, such as a network cable (i.e. an RJ-45 cable). Alternatively or additionally, the network device may be connected wirelessly to the access point.

The network device may, additionally or alternatively, be integrated with the access point and/or with one or more of a router, a network controller, or a modem, where one or more of these are provided in the local network.

In some embodiments, the network device further comprises local storage. The processor may be further configured to:
g) storing an answer of the user device in a local database, provided in the local storage of the network device.

The stored answer of the user device may be transmitted from the local database to the other device.

By transmitting the answers from the local database to the other device, a smaller and, in turn, more cost-efficient storage may be provided in the network device, as the answer need only to be stored in the local database until the next transmission.

The local storage may be provided as random access memory, RAM, a solid state disk (SSD), and/or as Flash-memory in the network device. The local database may, additionally or alternatively, be provided as a table, as comma separated values, or the like. The answer and corresponding identifier(s) of the user device may each be stored in a respective line or a respective row in the database.

In some embodiments, the identifier(s) of the user device is/are not transmitted to the other device. The other device may be a server located in an external network, i.e. externally of the local network. This, in turn, further anonymises the answers of the employees as the user devices and consequently the users cannot be identified using the identifiers externally of the local network.

According to a third aspect, the present invention relates to a user device for use in a local network, the local network comprising an access point, the user device comprising a processor configured to:
a) transmitting an association request to the access point,
b) receiving, via the access point, an association response,
c) transmitting one or more identifiers of the user device,
d) receive one or more questions relating to work environment safety, wherein, where it is determined that the user device has answered a previous question, the one or more questions are based on the previous question and/or a previous answer of the user device,
e) transmit an answer to the one or more questions via the access point,
wherein the user device is granted internet access, and wherein the answer of the user device is transmitted to another device.

The user device according to the third aspect may provide identical or similar advantages to the method according to the first aspect of the invention. Embodiments of the user device and/or the steps, which the processor of the user device is configured to perform, may be the same as described with respect to the method according to the first aspect of the invention.

According to a fourth aspect, the invention relates to a system comprising a user device, an access point, and a network device, the network device being communicatively connected to the access point in a local network, wherein the system further comprises another device, and wherein the access point is configured to receive an association request from a user device which connects to the local network and transmit an association response to the user device,
and wherein the network device comprises a processor configured to perform the steps of:
a) requesting one or more identifiers of the user device,
b) determining whether the user device has answered a previous question,
c) subsequent to step b), transmitting one or more questions relating to work environment safety to the user device, wherein, where it is determined that the user device has answered a previous question, the one or more questions are based on the previous question and/or a previous answer of the user device,
d) obtaining an answer to the one or more questions from the user device,
e) providing the user device with internet access, and
f) transmitting the answer of the user device to another device.

The system according to the fourth aspect may provide identical or similar advantages to the method according to the first aspect of the invention, the network device according to the second aspect, and/or the user device according to the third aspect of the invention. Embodiments of the system and/or the steps, which the processor of the network device is configured to perform, may be the same as described with respect to the method according to the first aspect of the invention, the network device according to the second aspect, and/or the user device according to the third aspect of the invention.

According to a fifth aspect, the invention relates to a method for collecting work environment safety data at offshore locations without cellular data coverage in a local network comprising an access point, the method comprising the steps of:
a) receiving, at the access point, an association request from a user device which connects to the local network,
b) transmitting, via the access point, an association response to the user device,
c) requesting one or more identifiers of the user device,
d) determining whether the user device has answered a previous question,
e) subsequent to step d), transmitting one or more questions relating to work environment safety to the user device, wherein, where it is determined that the user device has answered a previous question, the one or more questions are based on the previous question and/or a previous answer of the user device,
f) obtaining an answer to the one or more questions from the user device,
g) providing the user device with internet access, and
h) transmitting the answer of the user device to another device.

The method according to the fifth aspect may provide identical or similar advantages to the method according to the first aspect of the invention. Embodiments of the method according to the fifth aspect of the invention, may be the same as described with respect to the method according to the first aspect of the invention.

The different aspects of the present invention can be implemented in different ways including as a method for collecting work environment safety data, a network device, a user device, a system, and a method for collecting work environment safety data at offshore locations without cellular data coverage as described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a flow chart of a method for collecting work environment safety data in a local network comprising an access point according to an embodiment of the present invention,
Fig. 2 shows a flow chart of a method for collecting work environment safety data in a local network comprising an access point according to another embodiment of the present invention,
Fig. 3 shows a system according to an embodiment of the present invention,
Fig. 4 shows a schematic drawing of a user device for use in a local network according to an embodiment of the present invention,
Fig. 5 shows a schematic drawing of a network device for collecting work environment safety data in a local network according to an embodiment of the present invention.

### Detailed description

In the following description, reference is made to the accompanying figures, which show by way of illustration how the invention may be practiced. Similar reference numerals are used for similar elements across the various embodiments and figures described herein.

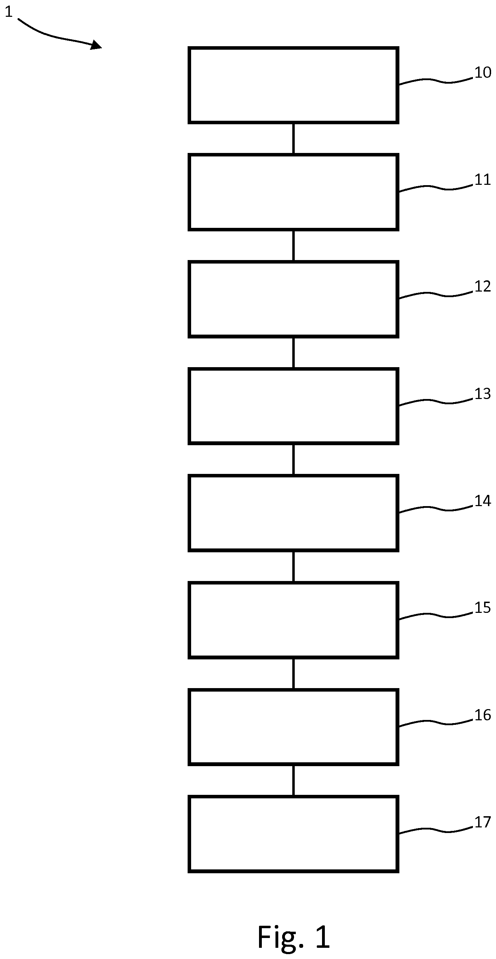

Fig. 1 shows a flow chart of a method 1 for collecting work environment safety data in a local network comprising an access point according to an embodiment of the present invention. The method 1 starts in step 10, wherein the access point receives an association request from a user device, which connects to the local network. Subsequently, in step 11, the access point transmits an association response to the user device. The user device is communicatively connected with, i.e. has a data connection capable of transferring data between itself and, the local network, when the association response is transmitted in step 11. In other embodiments, the user device may be communicatively connected with or have a data connection to the local network before, during, and/or after the association request is received at the access point.

The connection between the user device and the access point is a 2.4 GHz Wireless Fidelity (Wi-Fi) connection according to the IEEE 802.11-standard, and the association request and response of steps 10 and 11 are therefore in accordance with the IEEE 802.11-standard. In other embodiments, the connection between the user device and the access point is another type of wireless connection on frequencies below 2.4 GHz, of approximately 2.4 GHz or higher, such as a 5GHz Wi-Fi connection, a Bluetooth®-connection, a ZigBee-connection, a Z-Wave-connection, or the like. The association request and response of steps 10 and 11 may thus correspond to a given handshake procedure according to the specific wireless communication standard.

In some embodiments, further steps may be performed before the user device is communicatively connected to the local network, such as the access point receiving and transmitting an authentication request and an authentication response, respectively. Further steps (not shown) may in some embodiments here be taken, such as providing the user device with an IP address, subnet mask, or the like.

In step 12 of the method 1, one or more identifiers are requested from the user device. Here, one identifier corresponding to a MAC-address of the user device is requested. The identifier is transmitted via the access point (not shown) to a network device in the local network. In other embodiments, the identifier may be transmitted to a different device in or outside the local network.

In step 13 of the method 1, it is determined whether the user device has answered a previous question. The determination is based on the identifier of the user device, requested in step 12. The determination is, in the embodiment of the method 1 shown in Fig. 1, performed by comparing the identifier, i.e. the MAC-address of the user device with a list of MAC-addresses from user devices who have previously connected to the network. The list is stored in a database. Where no match between the MAC-address of the user device and a MAC-address in the list of MAC-addresses is found, it is determined that the user device has not answered a previous question. Where, on the other hand, a match between the MAC-address of the user device and a MAC-address in the list of MAC-addresses is found, it is determined that the user device has answered a previous question. The list of MAC-addresses is stored in a database, which further comprises an indication of the previous question, i.e. which question or questions, the user device has previously answered. Each of the indications correspond to a MAC-address of the list of MAC-addresses. Where another identifier than the MAC-address of the user device is requested in step 12, step 13 may compare the particular identifier to a list of identifiers of the same type.

In other embodiments, no indication of such question(s) are stored in the database. The database may, instead or additionally, comprise an indication that a question or any question has been answered, the answer to one or more previous question, or the next question(s) to be transmitted to the user device. The database may alternatively or additionally be stored in a different device in or outside the local network.

The determination is carried out by a network device in the local network, in which network device the database is furthermore stored. In another embodiment, the determination may be carried out by a further device in or outside the local network.

In step 14 of the method 1, a question is transmitted to the user device via the access point. The question is selected by the network device based on the indication of the previous question corresponding to the MAC-address, which matches with the MAC-address of the user device, in the list of MAC-addresses stored in the database.

The question is selected from a list of predetermined questions stored in another database. Where the user device has not previously answered all the questions in the database, i.e. where all the questions in the database is not a previous question for the user device, a question which has not been answered by the user device is selected and transmitted to the user device. In other embodiments, the questions may be requested by the network device from another device in or outside the local network, may be generated by the network device, and/or may be transmitted via a further device in or outside the local network. Alternatively or additionally, more than one question may be transmitted, such as a plurality of questions to be answered consecutively by the user device.

Where all the questions in the database are previous questions to the user device, a question which the user device has not recently answered is selected. The question is here determined based on a stored time stamp, stored in the database, of the answer. In other embodiments, the question may be a specific question or be selected based on one or more criteria or randomly from a group of specific questions from the database.

Where it in step 13 is determined that the user device has not answered a previous question, a random question is selected. In other embodiments, a predetermined first question may be transmitted to the user device in step 14.

In step 15 of the method 1, an answer to the question(s) is obtained. The answer is transmitted from the user device via the access point to the network device in the local network.

In another embodiment, the answer may be obtained by a further device in or outside the local network and/or may be transmitted via the access point to another device in or outside the local network.

In step 16 of the method 1, internet access is provided to the user device. The internet access is provided via the access point by the network device. Where the local network comprises a network controller for controlling the network access and/or restrictions, such as internet access, to devices in the local network, the network device may grant the user device internet access via the network controller. In other embodiments, a further device in or outside the local network may provide the internet access to the user device.

In step 17 of the method 1, the answer of the user device is transmitted from the database to another device. The other device is an online server, i.e. a server connected to the internet, and the user transmits the answers via the internet. The transmission is performed via the network device over an encrypted connection to the server. In other embodiments, the connection may be a Virtual Private Network (VPN) connection, a tunnelled connection, or the like.

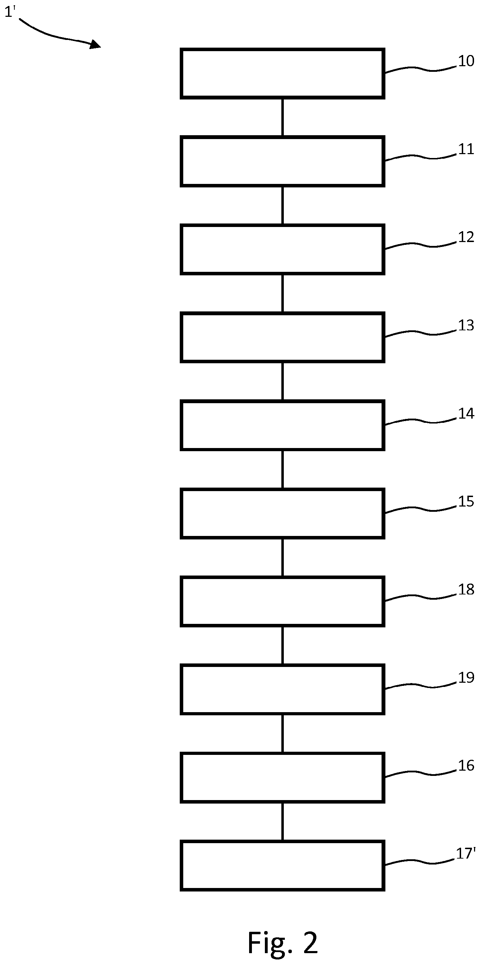

Fig. 2 shows another embodiment of a method 1' for collecting work environment safety data in a local network comprising an access point according of the present invention. The method 1' comprises steps 10, 11, 12, 13, 14, 15, and 16 corresponding and identical to the steps 10, 11, 12, 13, 14, 15, 16 of the method 1 described with reference to Fig. 1.

The method 1' shown in Fig. 2 further comprises the step 18 of verifying that the answer substantially fulfils one or more predetermined criteria. The step 18 is, in the method 1', performed before step 16 and after step 15, in which an answer to the one or more questions is obtained. In another embodiment, step 18 may be performed after step 16.

The predetermined criteria are a predetermined set of values, where the answer is to correspond to at least one of the values for the answer to be verified. The values are predetermined possible answers to each of the questions. In other embodiments, the values may be a predetermined length, such as a number of letters, of the answer, or a combination thereof. The verification is performed by the network device. In another embodiment, the verification is carried out in a further device in or outside the local network.

The method 1' shown in Fig. 2 further comprises step 19, in which the identifier(s), i.e. the MAC-address, and the answer of the user device is stored. The step is, in the method 1', performed before step 16 and after step 15, in which an answer to the one or more questions is obtained. In another embodiment, step 19 may be performed after step 16.

The network device in the local network stores the answer and the identifier. The answers are stored in a local database separate from the database comprising the list of MAC-addresses and the indications of previous question(s). The database comprising the list of MAC-addresses and the corresponding indications of previous question(s) are updated in accordance with the answer obtained from the user device. In another embodiment, the answer of the user device is stored in the same database as the database comprising the list of MAC-addresses and the corresponding indications of previous questions. In another embodiment a further device in or outside the local network may store the answer and the identifier, and/or the answer and the identifier may be stored by different devices.

In step 17', the stored answer is transmitted from the local database to another device, i.e. an online server, via the internet, in a similar way as in step 17 of the method 1.

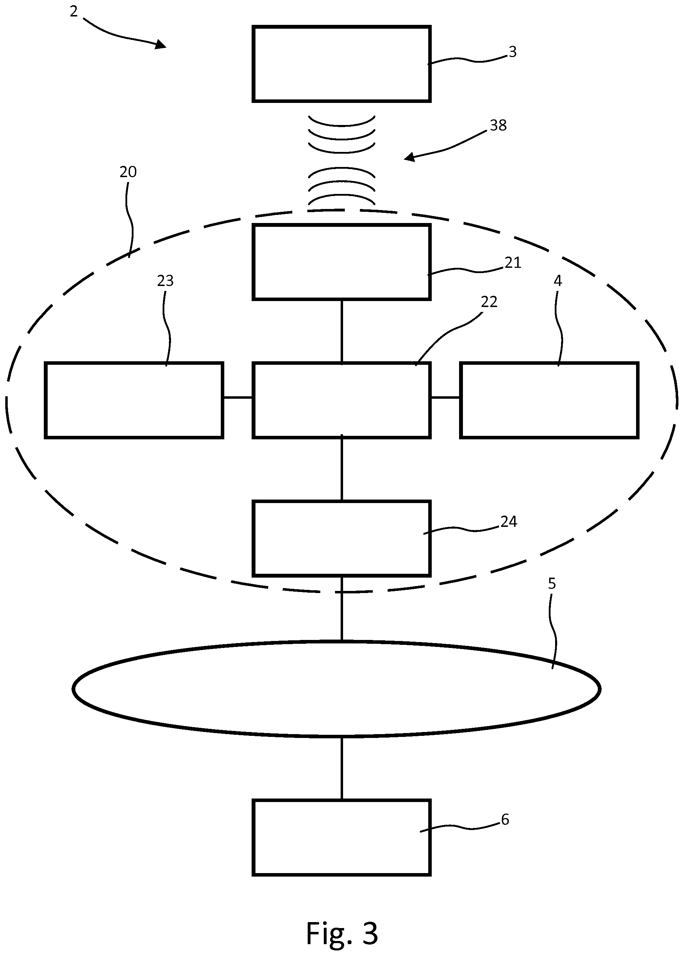

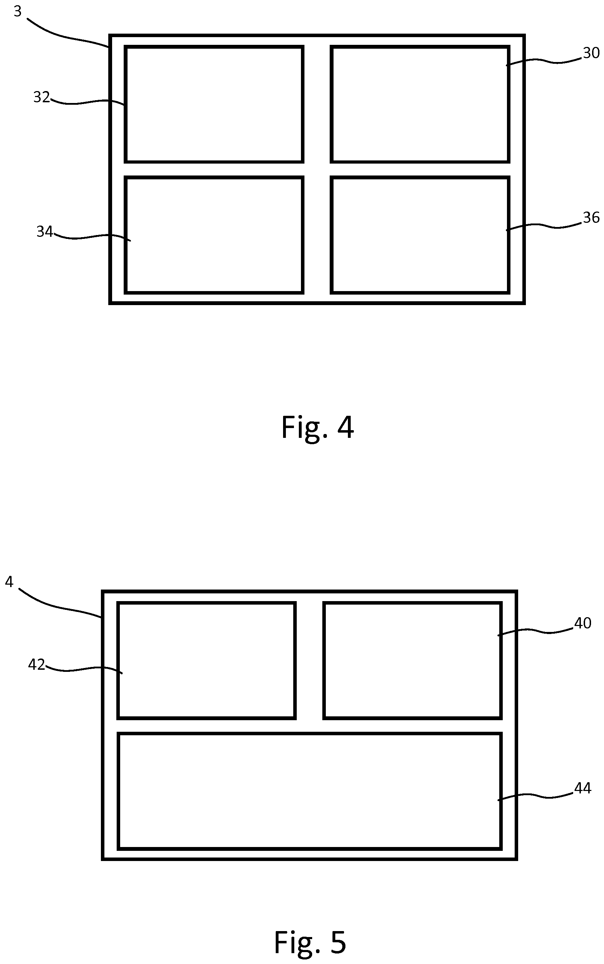

Fig. 3 shows a system 2 according to an embodiment of the present invention. The system 2 comprises a user device 3 as shown in Fig. 4 and a network device 4 as shown in Fig. 5.

The network device 4 comprises, as seen in Fig. 5, a network unit 40, a storage 42, and a processor 44, which is communicatively connected to the network unit 40 and the storage 42. The user device 3 comprises, as seen in Fig. 4, a wireless network unit 30, a user input device 32, a display 34, and a processor 36 communicatively coupled to the wireless network unit 30, the user input unit 32, and the display 34. The user device 3 is network enabled, i.e. capable of connecting to a network via the wireless network unit.

When the user device 3 connects to a local network 20, i.e. a Wi-Fi network, the processor 36 transmits an association request to an access point 21 of the local network 20 and receives, via the access point 21, an association response. The transmission and receipt of the association request and association response, respectively, is carried out over a wireless connection 38 via the wireless network unit 30 of the user device 3. The wireless network unit 30 is a Wi-Fi module and the wireless connection 38 is a Wi-Fi connection in accordance with the IEEE 802.11 standard. The user device 3 is here assigned an IP-address, subnet mask, and default gateway address, etc. in accordance with the relevant IEEE 802.11 standard. In other embodiments, the wireless network unit 30 may comprise a wireless network card or chip, a Bluetooth® chip, or the like, and the wireless connection 38 may thus be a Bluetooth® or a similar connection.

The access point 21 is communicatively connected to a gateway 22, which, in turn, is connected to a network controller 23, a satellite modem 24, and the network device 4. The network device 4, access point 21, network controller 23, and the modem 24 are thus each communicatively connected with each other via the gateway 22. The modem 24 and via this the other devices 4, 21, 22, 23 in the local network 20 are connected to the internet 5, and a connection is provided to a remote server 6 via the internet 5. In the system shown in Fig. 3, the access point 21, gateway 22, network controller 23, modem 24, and network device 4 are provided as individual devices. In other embodiments, one or more of these devices 4, 21, 22, 23, 24 may be integrated into one or more devices, such as known from a router. Alternatively, or additionally, the local network 20 may comprise further devices such as a switch, a network hub, a local storage unit, such as a local server, or the like.

The devices within the local network 20 are here connected via a wired network connection. Hence, the network unit 40 of the network device 4 here comprises an RJ45 port and is connected to the gateway 22 by means of an RJ45 cable and the RJ45 port. The wired connection may in other embodiments be provided by means of other ports than an RJ45 port and other cables than an RJ45 cable. In other embodiments, the network unit 40 may be a wireless network unit similar to or different from the wireless network unit 30 of the user device 3 shown in Fig. 4. In this case, the network device 4 may, instead, be connected wirelessly to the access point 21 and through the access point 21 to the gateway 22 and the further devices 23, 24 in the local network 20.

When the association request and response has been transmitted/received, the network controller 23 redirects the data traffic from the user device 3 to the network device 4. No internet access is at this point provided to the user device 3. The processor 44 of the network device 4 requests one or more identifiers, i.e. a MAC-address, of the user device 3 via the gateway 22, the access point 21, and the wireless connection 38. The processor 36 of the user device 3, via the wireless network unit 30, then transmits the MAC-address of the user device 3 to the network device 4. The processor of the network device 4 stores the MAC-address in a database in the storage 42 of the network device 4, as also described with respect to step 12 of the methods 1 and 1' of Figs. 1 and 2. Where a local server or another storage unit is provided in the local network 20, the network device 4 may alternatively or additionally store the MAC-address or request the MAC-address to be stored therein.

Subsequently, the processor 44 of the network device 4 determines whether the user device 3 has answered a previous question by comparing the MAC-address of the user device 3 with a list of MAC-addresses in a database. The determination is carried out as described with respect to step 13 of the methods 1 and 1' of Figs. 1 and 2.

Thereafter, the processor 44 transmits, via the network unit 40, one or more questions relating to work environment safety to the user device 3, wherein, where it is determined that the user device has answered a previous question, the one or more questions are based on the previous question and/or a previous answer of the user device. The determination is carried out as described with respect to steps 13 and 14 of the methods 1 and 1' of Figs. 1 and 2.

When a question is received at the user device 3, the processor 36 of the user device 3 presents it on the display 34 and awaits user input from the user input unit 32, i.e. a keyboard. In other embodiments, the input unit 32 comprises another human interface device (HID), such as a mouse, touch-pad, trackpad, pen, or the like, or is integrated with the display 34 so as to form a touchscreen. Where several question are received at the user device 3, they may be presented simultaneously or subsequent to each other.

The processor 36 of the user device 3 then transmits, via the wireless network module 30, an answer to the one or more questions, based on the input from the user from the user input unit 32, via the access point 21 to the network device 4. The processor 44 of the network device stores the answer in a database in the storage 42 and a database in the storage 42, comprising the MAC-addresses and the indicators of any previous question, is updated by the processor 44 of the network device 4. The storage 42 is here a flash-type storage. In other embodiments, the storage may be a solid state drive (SSD), random access memory (RAM), a hard disk, electrically erasable programmable read-only memory (EEPROM), or the like. The network device 4 further comprises a non-volatile memory (not shown), i.e. a read-only memory (ROM), comprising an executable, computer-readable program which allows and/or causes the processor 44 to perform the steps described in this specification.

Thereafter, the processor 44 provides the user device 3 with internet access via the network unit 40, the gateway 22, and the modem 24. Internet access is here provided for 24 hours for the user device 3. When the user device 3, after expiry of this 24-hour period connects to the local network 20 by transmitting, via the wireless connection 38, an association request to the access point 21 and receiving an association response, the network device 4 will, again, request the MAC-address of the user device 3 and store this in the database in the storage 42. It will, however, here be determined that the user device 3 has answered a previous question, and a different question will thus be transmitted by the network device 4 to the user device 3.

The network device 4, by the processor 44 and the network unit 40, transmits the stored answer of the user device 3 from the database of the storage 42 to the server 6 outside the local network 20 via the internet 5. The network device 4 transmits the answer, when a transmit request from the server 6 is received at the network device 4. The network device 4 only transmits the answers from the database and not the MAC-address of the user device 3. Various user devices 3 may connect to the local network 20 and, thus, various MAC-addresses and answers may be stored in the database. In other embodiments, the network device 4 transmits the stored answer(s) of the user device(s) to the server 6 at regular intervals or based on a determination of the available bandwidth of the internet connection. In some embodiments, the MAC-address(es) may be transmitted, or may be encrypted, hashed, and/or (pseudo-)anonymised and subsequently transmitted.

The server 6 may in other embodiments be another device in or outside the local network 20.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method for collecting work environment safety data in a local network comprising an access point, the method comprising the steps of:
a) receiving, at the access point, an association request from a user device which connects to the local network,
b) transmitting, via the access point, an association response to the user device,
c) requesting one or more identifiers of the user device,
d) determining whether the user device has answered a previous question,
e) subsequent to step d), transmitting one or more questions relating to work environment safety to the user device, wherein, where it is determined that the user device has answered a previous question, the one or more questions are based on the previous question and/or a previous answer of the user device,
f) obtaining an answer to the one or more questions from the user device,
g) providing the user device with internet access, and
h) transmitting the answer of the user device to another device.

2. The method according to claim 1 further comprising the step of:
i) storing the one or more identifiers of the user device and the answer of the user device in a local database,
and wherein step h) comprises transmitting the stored answer from the local database to the other device.

3. The method according to claim 1 or 2, wherein step g) comprises providing internet access to the user device for a predetermined internet session time.

4. The method according to any one of the preceding claims, wherein step 0 comprises transmitting the answer of the user device to the other device without transmitting the one or more identifiers of the user device.

5. The method according to any one of the preceding claims, wherein step d) comprises determining whether the user device has answered the previous question based on the identifier of the user device, a stored identifier of the user device, and one or more of: a stored answer to the previous question, an indication that the previous question has been answered, an indication of the next question to be answered by the user device.

6. The method according to any one of the preceding claims, wherein the one or more questions are selected from a plurality of questions, said plurality of predetermined questions comprising the previous question.

7. The method according to any one of the preceding claims, wherein the other device is a remote device, such as a server, arranged externally of the local network.

8. The method according to any one of the preceding claims, wherein internet connectivity for the internet access is provided via a satellite connection.

9. The method according to any one of the preceding claims wherein step h) comprises receiving an answer transmit request from the other device and in response hereto transmit the answer of the user device to the other device.

10. The method according to any one of the preceding claims wherein the one or more identifiers comprises a hardware identifier, such as a MAC address, of the user device.

11. A network device for collecting work environment safety data in a local network, the local network comprising an access point configured to receive an association request from a user device which connects to the local network and transmit an association response to the user device, the network device comprising a processor configured to perform the steps of:
a) requesting one or more identifiers of the user device,
b) determining whether the user device has answered a previous question,
c) subsequent to step b), transmitting one or more questions relating to work environment safety to the user device, wherein, where it is determined that the user device has answered a previous question, the one or more questions are based on the previous question and/or a previous answer of the user device,
d) obtaining an answer to the one or more questions from the user device,
e) providing the user device with internet access, and
f) transmitting the answer of the user device to another device.

12. The network device according to claim 11 further comprising local storage, and wherein the processor is further configured to:
g) storing an answer of the user device in a local database, provided in the local storage of the network device,
and wherein the stored answer of the user device is transmitted from the local database to the other device.

13. A user device for use in a local network comprising an access point, the user device comprising a processor configured to:
a) transmitting an association request to the access point,
b) receiving, via the access point, an association response,
c) transmitting one or more identifiers of the user device,
d) receive one or more questions relating to work environment safety, wherein, where it is determined that the user device has answered a previous question, the one or more questions are based on the previous question and/or a previous answer of the user device,
e) transmit an answer to the one or more questions via the access point,
wherein the user device is granted internet access, and wherein the answer of the user device is transmitted to another device.

14. A system comprising a user device, an access point, and a network device, the network device being communicatively connected to the access point in a local network, wherein the system further comprises another device, and wherein the access point is configured to receive an association request from a user device which connects to the local network and transmit an association response to the user device,
and wherein the network device comprises a processor configured to perform the steps of:
a) requesting one or more identifiers of the user device,
b) determining whether the user device has answered a previous question,
c) subsequent to step b), transmitting one or more questions relating to work environment safety to the user device, wherein, where it is determined that the user device has answered a previous question, the one or more questions are based on the previous question and/or a previous answer of the user device,
d) obtaining an answer to the one or more questions from the user device,
e) providing the user device with internet access, and
f) transmitting the answer of the user device to another device.

15. A method for collecting work environment safety data at offshore locations without cellular data coverage in a local network comprising an access point, the method comprising the steps of:
a) receiving, at the access point, an association request from a user device which connects to the local network,
b) transmitting, via the access point, an association response to the user device,
c) requesting one or more identifiers of the user device,
d) determining whether the user device has answered a previous question,
e) subsequent to step d), transmitting one or more questions relating to work environment safety to the user device, wherein, where it is determined that the user device has answered a previous question, the one or more questions are based on the previous question and/or a previous answer of the user device,
f) obtaining an answer to the one or more questions from the user device,
g) providing the user device with internet access, and
h) transmitting the answer of the user device to another device.
